## Europäisches Patentamt
## European Patent Office
## Office européen des brevets

(19)

(11) Veröffentlichungsnummer: **0 158 714**
**B1**

(12) **EUROPÄISCHE PATENTSCHRIFT**

(45) Veröffentlichungstag der Patentschrift:
04.01.89

(51) Int. Cl.⁴: **C 02 F 1/52,** B 01 D 21/00

(21) Anmeldenummer: 84114237.5

(22) Anmeldetag: 24.11.84

(54) Behälter und Anlage zum Klären von mit Feststoffen beladenen Flüssigkeiten.

(30) Priorität: 28.11.83 CH 6355/83

(43) Veröffentlichungstag der Anmeldung:
23.10.85 Patentblatt 85/43

(45) Bekanntmachung des Hinweises auf die Patenterteilung:
04.01.89 Patentblatt 89/1

(84) Benannte Vertragsstaaten:
AT CH DE FR IT LI

(56) Entgegenhaltungen:
DE-C-225 281
FR-A-2 181 520
US-A-2 352 772
US-A-3 779 910

(73) Patentinhaber: **Johann Müller AG Kieswerk & Baggereiunternehmung, Zürcherstrasse 12, CH-8716 Schmerikon (CH)**
Patentinhaber: **Trümmel, Friedrich, Gerbestrasse 8, CH- 8730 Uznach (CH)**

(72) Erfinder: **Trümmel, Friedrich, Gerbestrasse 8, CH-8730 Uznach (CH)**

(74) Vertreter: **EGLI- EUROPEAN PATENT ATTORNEYS, Horneggstrasse 4, CH- 8008 Zürich (CH)**

LIBER, STOCKHOLM 1989

EP 0 158 714 B1

## Beschreibung

Die Erfindung betrifft einen Behälter zum Klären von mit Feststoffen beladenen Flüssigkeiten unter Verwendung von Flockungsmitteln, in welchen die ungeklärte Flüssigkeit eingeleitet und nach der Sedimentation der Feststoffe die geklärte Flüssigkeit über einen Überlauf abgeleitet wird, während die sedimentierten Feststoffe aus dem Behälter entfernt werden, wobei der Behälter in seinem Mittenbereich durch einen Ringboden mit einem Durchgang in eine obere und in eine untere Kammer unterteilt ist und der Einlauf der ungeklärten Flüssigkeit unter dem Ringboden in der unteren Kammer zur Sedimentation des gröberen Anteils der Feststoffe und zur Überleitung des feineren Anteils der Feststoffe in die obere Kammer zur Sedimentation nach seiner Koagulation und zur Austragung in die untere Kammer angeordnet ist, und eine mit dem Behälter ausgerüstete Anlage.

In vielen Betriebsoperationen der Verfahrens- und Aufbereitungstechnik fallen Flüssigkeiten an, die mit Feststoffen aller Art beladen sind. Entsprechend den bestehenden Vorschriften dürfen solche Flüssigkeiten nicht mehr in die Gewässer oder in die Kanalisation geleitet werden, wobei zusätzlich dazukommt, dass nicht nur wegen des bestehenden Verbotes, sondern weil meistens auch nicht genügend Frischwasser zur Verfügung gestellt werden kann, das mit Feststoffen beladene Abwasser aufbereitet und wiederverwendet werden muss.

Zum Aufbereiten von mit Feststoffen beladenen Flüssigkeiten sind verschiedene Verfahren bekannt, von denen ein grosser Teil auf der Ausnützung der unterschiedlichen Wichte der Flüssigkeit und der Feststoffe beruht. Besonders einfach lässt sich das Trennen der Flüssigkeit von den Feststoffen durch Sedimentieren durchführen, bei welchem Verfahren die in der Flüssigkeit suspendierten Feststoffe durch Einwirken der Schwerkraft aus der Flüssigkeit entfernt werden. Zur Verbesserung dieses Trennvorganges, insbesondere zur rascheren Absetzung des Feinanteils der Feststoffe, werden für Sedimentationsanlagen zusätzlich Flockungseinrichtungen verwendet, in denen Koagulationsmittel je nach Art der Feststoffe eingesetzt werden. Diese Mittel koagulieren die in der Flüssigkeit verteilten feinen und feinsten Feststoffteilchen, wobei je nach Bedarf der geflockte Feststoff aufschwimmen oder absinken kann. Schliesslich sollen sich aber die durch diese Zusammenballung der Feststoffe gebildeten Flocken wegen ihrer grösseren Masse schneller absetzen als die unkoagulierten Feststoffe.

Sedimentierungsanlagen sind je nach den zu verarbeitenden Flüssigkeitsmengen grossflächige Anlagen mit entsprechend grossen Absetzbehältern, die einen beträchtlichen baulichen Aufwand erfordern und deshalb grosse Kosten verursachen. Die Grösse der Absetzfläche ist bei gegebenen Flüssigkeitsmengen ein Mass für die Güte der Feststoffabscheidung. Reicht diese Grösse nicht aus, um einen erforderlichen Gehalt an Restfeststoffen zu erreichen, kann die Flockungsmitteldosierung erhöht werden. Dadurch wird zwar eine bessere Klärwirkung erzielt, jedoch werden dadurch die Betriebskosten erhöht. Dies ist besonders unerwünscht, da in vielen Fällen die durch die Sedimentation ausgeschiedenen Feststoffe nicht wieder verwendet werden können, sondern in Deponien abgelagert werden müssen.

Es ist auch bekannt, das Trennen von Feststoffen aus Flüssigkeiten in Behältern durchzuführen. Hierbei wird die zu behandelnde Flüssigkeit im Inneren des Behälters durch verschiedene Einbauten in der Weise geführt, dass ein möglichst hoher Ausscheidungswirkungsgrad erreicht wird. Nachteilig ist jedoch bei diesen Anlagen der komplizierte Aufbau, wodurch meistens ein ständiger Unterhalt erforderlich ist.

Aus der DE-C-225 281 ist ein Verfahren zur Reinigung von Wasser durch kohlensauren Baryt bekannt. Dabei ist ein Behälter durch einen Ringboden in eine obere und eine untere Kammer unterteilt. Das Rohwasser und das zur Entfernung der Bicarbonate erforderliche, in einem Kalksättiger beliebiger und bekannter Bauart hergestellte Kalkwasser tritt durch getrennte Rohre unterhalb des Ringbodens in die untere Kammer ein. Das Gemisch steigt dann in die Höhe und tritt, nachdem die chemische Reaktion vollzogen und der gebildete Schlamm durch Dekantation zum grössten Teil entfernt ist durch entsprechende Öffnungen wieder aus. Der dagegen in der unteren Kammer entstandene Schlamm sammelt sich unten in dem Konus dieses Raumes an und wird abgelassen.

Dieses Verfahren ist auf die Klärung von mit Feststoff beladenen Flüssigkeiten nur in sehr begrenztem Umfang übertragbar. Zum einen findet hier keine Trennung der Sedimentation von schwereren Teilchen in der unteren Kammer und ein Absetzen von leichteren Teilchen auf dem Ringboden statt. Ferner ist die Sedimentationsfläche des Ringbodens äusserst gering.

Aus der US-A-2 352 772 ist ein weiterer Behälter für die Behandlung von beispielsweise Klärschlamm bekannt, wobei dieser Klärschlamm mit Flockungsmittel versetzt wird. Der dort gezeigte Behälter hat eine zylindrische Form und besitzt einen Ringboden, welcher den Behälter in eine untere und eine obere Kammer unterteilt. Dieser Ringboden bildet einen Durchlass mit in die obere Kammer aufsteigenden Wänden. Die zu reinigende Flüssigkeit wird nahe dem Boden des Behälters eingebracht, so dass sich hier die schweren Partikel bereits absetzen können. Ansonsten steigt der übrige Anteil der Flüssigkeit auf und dringt durch den im Ringboden gebildeten Durchlass in die obere Kammer. Feinere Teilchen setzen sich dann auf dem Ringboden ab, der von einem Räumer bestrichen ist.

Bei dieser Anordnung wirkt sich zum einen der durchgehend zylindrische Querschnitt des Behälters negativ aus, da beispielsweise die nach oben gerichtete Strömung nicht beruhigt wird, so dass ein Absetzen von feineren Partikeln nicht gewährleistet ist. Ferner besitzt auch der Ringboden nur eine geringe Sedimentationsfläche.

Hier setzt die Erfindung ein, der die Aufgabe zugrunde liegt, einen Behälter der eingangs beschriebenen Art so ausgestalten, dass das Trennen der Feststoffe trotz einfacher Bauart mit hohem Wirkungsgrad erreicht wird und zudem nur geringe Mengen an Flockungsmittel verbraucht werden.

Diese Aufgabe wird gemäss der Erfindung dadurch gelöst, dass die Kammer unterhalb des Ringbodens im wesentlichen Kegelform aufweist und die obere Kammer als zylindrischer Kragen ausgebildet ist, wobei der Ringboden an seinem freien Ende mit einem gegen den Behälterunterteil gerichteten Stutzen versehen ist, welcher den Durchgang bildet, wobei in diesem Durchgang mindestens ein weiterer zum Stutzen konzentrischer, ringförmiger Stutzen eingebaut ist.

Der Übergang des Behälters von einer querschnittlich dargestellten Kegelform in eine Zylinderform führt beim Aufsteigen von Flüssigkeit zu einer Beruhigung der nach oben gerichteten Strömung. Hierdurch ist das Absetzen von feinen Anteilen an Feststoffen auf dem Ringboden erleichtert.

Eine weitere günstige Beeinflussung der Strömung wird dadurch erreicht, dass die Einleitung der mit Feststoffen beladenen Flüssigkeit in zumindest zwei Teilströmen geschieht, welche entgegengesetzt zueinander gerichtet sind. Dadurch wird eine Rotation der gesamten Behälterflüssigkeit weitgegend verhindert, so dass wiederum ein Absetzen von Feststoffteilchen erleichtert ist.

Durch den Einbau weiterer Stutzen in den Durchgang wird die Absetzfläche erheblich vergrössert, ohne dass der Behälter selbst eine Vergrösserung erfährt. Bei allen Sedimentationsvorgängen ist die zur Verfügung stehende Absetzfläche u. a. ein Mass für die Wirksamkeit der Sedimentationsanlage. Dieser Vergrösserung der Sedimentationsfläche sind allerdings Grenzen gesetzt, denn die zusätzlichen Einbauten verringern die offenen Durchflussflächen und erhöhen dadurch die Aufstromgeschwindigkeit des Wassers. Diesem Umstand muss bei den Einbauten Rechnung getragen werden, da die Sedimentation nur dann stattfindet, wenn die Sedimentationsgeschwindigkeit grösser ist als die Aufstromgeschwindigkeit.

Die übrigen, in den Ansprüchen 3 bis 7 weiter beschriebenen Ausführungsformen der Erfindung verbessern deren Wirksamkeit in jedem einzelnen Fall.

Weiter umfasst die Erfindung auch eine Anlage zum Klären einer mit Feststoffen beladenen Flüssigkeit mit dem erfindungsgemässen Behälter, bei dem im Behälterunterteil ein Rührwerk mit einem der Behälterwand angepassten und ein Gitter aufweisenden Rahmen angeordnet ist.

Die Erfindung ist in der Zeichnung in einem Ausführungsbeispiel dargestellt und nachfolgend beschrieben. Es zeigen:

Fig. 1    einen Vertikalschnitt längs der Linie I - I in Fig. 2 einer Anlage zum Klären von mit Feststoffen beladenen Flüssigkeiten in der Grundform

Fig. 2    eine Draufsicht der Anlage nach Fig. 1 und

Fig. 3    einen Teilschnitt einer Anlage nach Fig. 1 mit zusätzlichen Einbauten, gemäß Anspruch 1

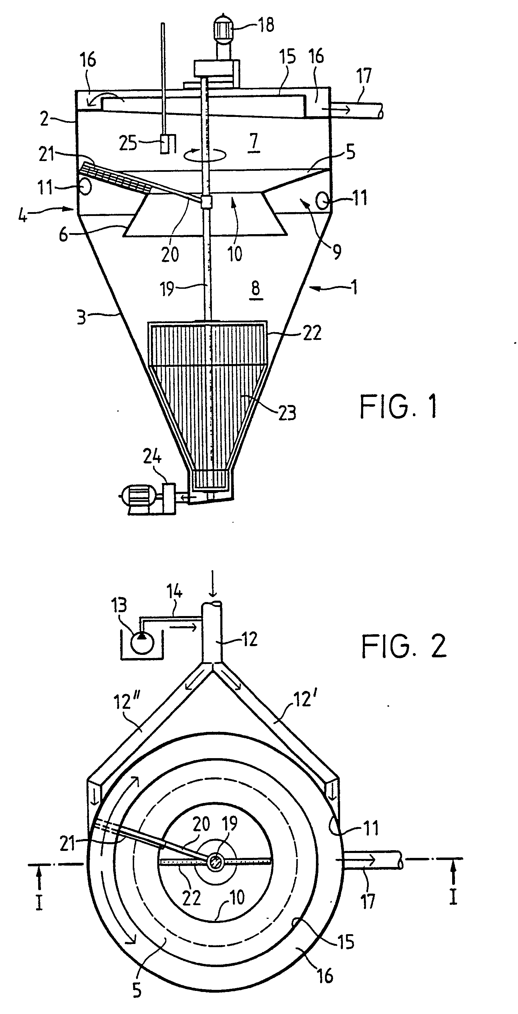

Die in Fig. 1 und 2 dargestellte Anlage weist einen Behälter 1 mit einem zylindrischen Oberteil 2 und einem konischen Unterteil 3 auf. Im Mittenbereich 4 des Behälters, etwa in der Nähe des Überganges des zylindrischen Oberteils 2 auf den konischen Unterteil 3, ist an der Innenwand des Behälters 1 ein Ringboden 5 befestigt, der an seinem freien Rand mit einem gegen den Unterteil 3 gerichteten Stutzen 6 versehen ist. Der Ringboden 5, der den Innenraum des Behälters 1 in eine obere Kammer 8 unterteilt, kann schüsselförmig, z. B. konisch, ausgebildet sein. Auch der Stutzen 6 kann zylindrisch oder konisch erweiternd oder verengend ausgebildet sein; der Ringboden 5, der Stutzen 6 und die entsprechende Wandpartie des Behälters 1 im Mittenbereich 4 bilden einen nach unten offenen Ringkanal 9, während der Ringboden 5 mit dem Stutzen 6 einen Durchgang 10 zwischen der oberen und der unteren Kammer 7, 8 bildet. In den Ringkanal 9 tritt das zu klärende Abwasser durch Mündungen 11 ein, das durch eine Zuleitung 12 zugeleitet wird. In die Zuleitung 12 wird auch das Flockungsmittel durch eine Pumpe 13 über eine Leitung 14 zugeführt.

Aus Fig. 2 ist ersichtlich, dass die Zuleitung 12 sich in zwei Teilleitungen 12', 12'' teilt. Entsprechend sind zwei Mündungen 11 vorgesehen, die, siehe Fig. 1, in unterschiedlicher Höhe angeordnet sind. Durch diese Anordnung werden zwei entgegengesetzt gerichtete Teilströme in den Ringkanal 9 eingeleitet und dadurch eine Rotation der gesamten Behälterflüssigkeit weitgehend verhindert. Es kann aber auch nur eine Zuleitung 12 mit einer Mündung 11 vorgesehen werden, wobei beim Eintritt durch Leitbleche die Unterteilung in die beiden entgegengesetzt gerichteten Teilströme vorgenommen wird. Es können aber auch mehr als nur zwei Mündungen 11 vorgesehen werden, die an verschiedenen Stellen am Umfang und in verschiedener Höhe angeordnet werden. Am oberen Rand des Behälteroberteils 2 ist ein Überlauf 15 angeordnet, über den die geklärte Flüssigkeit in einen Ringkanal 16 und von dort in eine Leitung 17 abfliesst, von wo sie der Wiederverwendung zugeführt wird.

Auf dem Behälter 1 ist ein motorischer Antrieb 18, z. B. ein Getriebemotor, angeordnet, der eine im Zentrum des Behälters 1 gelagerte vertikale Welle 19 antreibt. An der Welle 19 ist ein Arm 20 befestigt, der einen Räumer 21, z. B. einen Schildräumer, trägt. Der Räumer 21 bewegt sich über den Ringboden 5 und räumt das sich auf dem Ringboden 5 absetzende Feststoffmaterial, das durch den Durchgang 10 in die untere Kammer 8 absinkt.

Im unteren Teil des konischen Behälterunterteils 3 ist ein Rührrahmen 22 mit einem Gitter 23 an der Welle 19 befestigt, der somit mit dem Räumer 21 umläuft. Das Gitter 23 ist harfenförmig ausgebildet und weist vertikale, mit Abstand nebeneinanderliegende Stäbe, Drähte, Seile o. dgl. auf. Der sich in der unteren Kammer 8 absetzende Feststoff wird durch den Rührrahmen 22 in pumpfähigem Zustand gehalten und durch eine Schlammpumpe 24 aus dem Behälter 1 gefördert und an einer geeigneten Stelle abgelagert (nicht dargestellt). In die obere Kammer 7 taucht ein Ultraschall-Sensor 25 ein. Dieser Sensor hat die Aufgabe, den Feststoffanteil in der oberen Kammer festzustellen und entsprechend das in die Zuleitung 12 eingepumpte Flockungsmittel zu dosieren. Auf diese Weise wird nur soviel Flockungsmittel dosiert, als zur Erreichung des gewünschten Klärgrades erforderlich ist.

Die beschriebene Anlage arbeitet wie folgt:

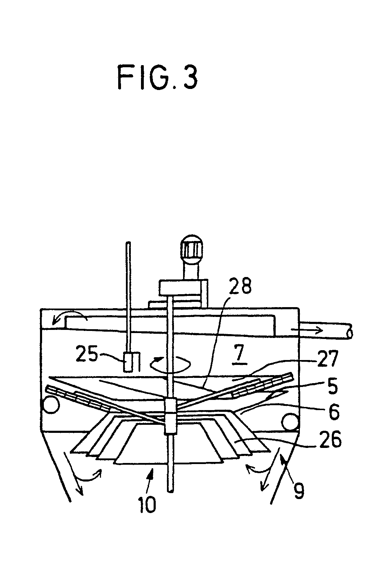

Das Abwasser tritt zusammen mit dem Flockungsmittel in den Ringkanal 9 ein, in dem, bedingt durch die Verwirbelung, die Koagulation der Feststoffteilchen einsetzt. Während der gröbere Anteil der Feststoffe direkt in den unteren Teil des konischen Behälterunterteils 3 absinkt, steigt der feinere Anteil der Feststoffe durch den Durchgang 10 in die obere Kammer 7. In dem Durchgang 10 kann ein weiterer, zum Stutzen 6 konzentrischer Stutzen 26, siehe Fig. 3, eingebaut ist, der zu einer besseren Feststoff-Abscheidung beiträgt. In der oberen Kammer 7 verringert sich wegen der grösseren Fläche die nach oben gerichtete Strömung, und es findet hier das Absetzen des feinen Anteils der Feststoffe auf dem Ringboden 5 statt.

Ebenfalls bringt der Einbau mindestens eines weiteren Ringbodens 27 über dem Ringboden 5, siehe Fig. 3, eine Verbesserung der Feststoff-Abscheidung in der Anlage. Der Ringboden 27 kann zweckmässig mit gebogenen Schlitzen 28 versehen sein, über die ein weiterer Räumer 29 ohne einzutauchen bewegt werden kann. Ein weiterer Stutzen 26 und ein weiterer Ringboden 27 können einzeln oder gemeinsam wie in Fig. 3 in einer Anlage eingesetzt werden.

Der Ultraschall-Sensor 25 stellt den noch aufsteigenden Feststoffanteil fest und beeinflusst ihn durch die Dosierung des Flockungsmittels im Sinne einer Konstanthaltung des nach oben abfliessenden Feinstanteils der Feststoffe. Die Grösse dieses Anteils wird so angesetzt, dass dadurch die Wiederverwendung der Flüssigkeit nicht beeinträchtigt wird.

Der auf dem schüsselförmigen Ringboden 5 abgesetzte Schlamm wird durch den Räumer 21 geräumt und zum Durchgang 10 befördert. Die Drehzahl des Räumers 21 und des Rührrahmens 22 ist zweckmässig einstellbar. In der oberen Kammer 7 bildet das Flockungsmittel eine Schicht feinster Flocken, welche wie ein schwimmender Filter wirkt und die aufsteigenden Teilchen behindert. Diese Schicht bewegt sich mit dem aufströmenden Wasser, bis sie den Ultraschall-Sensor 25 erreicht. Je nach der Feststoffkonzentration wird nun die Dosierung des Flockungsmittels geregelt. Wird die Dosierung des Flockungsmittels vergrössert, bewegt sich die Schicht wieder nach unten, worauf sich der Vorgang wiederholt.

Im konischen Behälterunterteil 3 verdichten sich die Feststoffe. Der rotierende Rührrahmen 22 stellt eine Homogenisiereinrichtung dar, die den Schlamm pumpfähig zu erhalten hat. Die harfenförmige Ausbildung des Gitters 23 verhindert die Klumpenbildung des Feststoffes, wodurch er selbst bei einem Feststoffanteil von über 50 Gew.-% Trockensubstanz mittels Zentrifugalpumpen förderbar ist.

Das aufsteigende geklärte Wasser läuft über den Überlauf 15 ab, sammelt sich im Ringkanal 16 und fliesst aus dem Behälter 1 zur Wiederverwendung ab.

Der im unteren Teil des Behälterunterteils 3 sich sammelnde Feststoff kann auch in anderer Weise entfernt werden, z. B. durch am Boden des Behälterunterteils 3 angeordnete Schleusen.

Der Betrieb der beschriebenen Anlage kann vollständig automatisiert werden. Die Einfachheit des Aufbaus des Behälters 1 verhindert die Bildung von Ablagerungen, die zu einer Störung des Betriebes führen könnten. Durch den Sensor 25 kann auch die richtige Dosierung des Flockungsmittels automatisiert werden.

**Beispiel:**

In einem Kieswerk ist der Schmutzwasseranfall 63 - 68 m³/h, wobei der Feststoffanteil im Schmutzwasser 70 - 120 g/l, d. h. 7 - 12 Gew.-%, beträgt.

Das Behältervolumen beträgt nur 11,7 m³, und es wird eine Trockensubstanz-Konzentration von 32 - 42 Gew.-% erreicht.

Der durchschnittliche Flockungsmittelverbrauch beträgt 10 g/m³ Schmutzwasser. Dies ergibt eine sehr günstige preisliche Belastung für die Kieserzeugung von nur 5 - 8 Rp/m³ Kies.

## Patentansprüche

1. Behälter zum Klären von mit Feststoffen beladenen Flüssigkeiten unter Verwendung von Flockungsmitteln, in welchen die ungeklärte Flüssigkeit eingeleitet und nach der Sedimentation der Feststoffe die geklärte Flüssigkeit über einen Überlauf (15) abgeleitet wird, während die sedimentierten Feststoffe aus dem Behälter entfernt werden, wobei der Behälter (1) in seinem Mittenbereich (4) durch einen Ringboden (5) mit einem Durchgang (10) in eine obere und in eine untere Kammer (7, 8) unterteilt ist und der Einlauf (11) der ungeklärten Flüssigkeit unter dem Ringboden in der unteren Kammer (8) zur Sedimentation des gröberen Anteils der Feststoffe und zur Überleitung des feineren Anteils der Feststoffe in die obere Kammer (7) zur Sedimentation nach seiner Koagulation und zur Austragung in die untere Kammer (8) angeordnet ist, dadurch gekennzeichnet, dass die Kammer (8) unterhalb des Ringbodens (5) im wesentlichen Kegelform aufweist und die obere Kammer (7) als zylindrischer Kragen ausgebildet ist, wobei der Ringboden (5) an seinem freien Ende mit einem gegen den Behälterunterteil gerichteten Stutzen (6) versehen ist, welcher den Durchgang (10) bildet, wobei in diesem Durchgang (10) mindestens ein weiterer zum Stutzen (6) konzentrischer, ringförmiger Stutzen (26) eingebaut ist.

2. Behälter nach Anspruch 1, dadurch gekennzeichnet, dass die Einleitung der mit Feststoffen beladenen Flüssigkeit in zumindest zwei Teilströmen geschieht, welche entgegengesetzt zueinander gerichtet sind.

3. Behälter nach Anspruch 1 oder 2, dadurch gekennzeichnet, dass der Stutzen (6) wahlweise zylindrisch oder konisch, insbesondere nach abwärts erweiternd, geformt ist.

4. Behälter nach Anspruch 1, dadurch gekennzeichnet, dass in der oberen Kammer (7) ein Ultraschall-Sensor (25) zur Messung der Feststoffkonzentration angeordnet ist.

5. Behälter nach Anspruch 1, dadurch gekennzeichnet, dass zum Austragen des in der oberen Kammer (7) sedimentierten Feststoffes der Ringboden (5) mit einem rotierenden Räumer (21) ausgerüstet ist.

6. Behälter nach wenigstens einem der Ansprüche 1 bis 5, dadurch gekennzeichnet, dass der weitere bzw. die weiteren Stutzen (26) als ein sich nach unten erweiternder abgestumpfter Kreiskegel ausgebildet ist bzw. sind.

7. Behälter nach wenigstens einem der Ansprüche 1 bis 5, dadurch gekennzeichnet, dass über dem Ringboden (5) mindestens ein weiterer Ringboden (27) mit vorzugsweise gebogenen Schlitzen (28) und rotierendem Räumer (29) angeordnet ist.

8. Anlage zum Klären einer mit Feststoffen beladenen Flüssigkeit mit einem Behälter (1) nach Anspruch 1, dadurch gekennzeichnet, dass im Behälterunterteil (3) ein Rührwerk mit einem der Behälterwand angepassten und ein Gitter (23) aufweisenden Rahmen (22) angeordnet ist.

9. Anlage nach Anspruch 8, dadurch gekennzeichnet, dass der Behälterunterteil (3) und der Rührwerkrahmen (22) konische Form aufweisen, wobei das Gitter (23) aus vertikalen Gitterelementen, z. B. Stäben, Drähten, Seilen od. dgl., gebildet ist.

10. Anlage nach Anspruch 8 oder 9, dadurch gekennzeichnet, dass das Rührwerk an der Welle (19) des Antriebes (18) des Räumers (21) befestigt ist.

## Claims

1. Container for clarifying solids-laden liquids using flocculants, into which the unclarified liquid is introduced and following the sedimentation of the solids the clarified liquid is drained off by means of an overflow (15), whilst the sedimented solids are removed from the container, in which the container (1) is subdivided in its central area (4) by an annular bottom (5) with a passage (10) into an upper and a lower chamber (7, 8) and the intake (11) for the unclarified liquid below the annular bottom in the lower chamber (8) serves to sediment the coarser fraction of the solids and to pass the finer fraction of the solids into the upper chamber (7) for sedimentation following the coagulation thereof and for discharging into the lower chamber (8), characterized in that chamber (8) below the annular bottom (5) substantially has a conical shape and the upper chamber (7) is constructed as a cylindrical collar, the annular bottom (5) being provided at its free end with a connection (8) directed against the lower part of the container and which forms the passage (10) and in the latter is installed at least one further annular connection (26) concentric to connection (6).

2. Container according to claim 1, characterized in that the introduction of the solids-laden liquid takes place in at least two partial flows, which are directed opposite to one another.

3. Container according to claims 1 or 2, characterized in that the connection (6) is either cylindrical or conical and in particular widens downwards.

4. Container according to claim 1, characterized in that an ultrasonic sensor (25) for measuring the solids concentration is placed in the upper chamber (7).

5. Container according to claim 1, characterized in that for discharging the solids sedimented in the upper chamber (7), the annular bottom (5) is equipped with a rotary scraper (21).

6. Container according to at least one of the claims 1 to 5, characterized in that the further connection or connections (26) are constructed as a downwardly widening truncated circular cone.

7. Container according to at least one of the claims 1 to 5, characterized in that above the annular bottom (5) is provided at least one further annular bottom (27) with preferable curved slits (28) and rotary scraper (29).

8. Installation for clarifying a solids-laden liquid with a container (1) according to claim 1, characterized in that in the lower part (3) of the container is provided a stirrer having a frame (22) adapted to the container wall and having a grid (23).

9. Installation according to claim 8, characterized in that the lower part (3) of the container and the stirrer frame (22) have a conical shape, the grid (23) being formed from vertical grid elements, e. g. rods, wires, cables, etc.

10. Installation according to claims 8 or 9, characterized in that the stirrer is fixed to the shaft (19) of drive (18) of scraper (21).

## Revendications

1. Récipient pour la clarification de liquides chargés de matières solides avec utilisation de moyens de floculation, dans lequel le liquide non clarifié est introduit et hors duquel, après la sédimentation des matières solides, le liquide clarifié est évacué par un trop-plein (15) tandis que les matières solides disposées sont enlevées du récipient, le récipient (1) étant subdivisé, dans sa zone médiane (4), par un fond annulaire (5) comportant une ouverture de passage (10), en deux chambres (7, 8) l'une supérieure l'autre inférieure et l'ouverture d'entrée (11) du liquide non clarifié étant ménagée sous le fond annulaire dans la chambre inférieure (8) pour la sédimentation de la fraction de plus forte granulométrie des matières solides et pour le transport de la fraction de plus faible granulométrie des matières solides dans la chambre supérieure (7) pour sa sédimentation après sa coagulation et pour son retour dans la chambre inférieure (8), caractérisé en ce que la chambre (8) située au-dessous du fond annulaire (5) a une forme essentiellement conique et que la chambre supérieure (7) a une forme cylindrique, le fond annulaire (5) comportant, à son extrémité libre, une tubulure (6) dirigée vers la partie supérieure du récipient, qui constitue l'ouverture de passage (10), cette ouverture de passage (10) contenant au moins une deuxième tubulure annulaire (26) montée concentriquement à la tubulure (6).

2. Récipient selon la revendication 1, caractérisé en ce que l'introduction du liquide chargé de matières solides s'effectue en au moins deux courants partiels de sens opposés.

3. Récipient selon les revendications 1 ou 2, caractérisé en ce que la tubulure (6) peut, au choix, être cylindrique ou conique, notamment en s'élargissant vers le bas.

4. Récipient selon la revendication 1, caractérisé en ce que la chambre supérieure (7) contient un organe (25) sensible aux ultra-sons pour la mesure de la concentration de matières solides.

5. Récipient selon la revendication 1, caractérisé en ce que, pour le transport des matières solides déposées dans la chambre supérieure (7), le fond annulaire (5) est équipé d'un dispositif de nettoyage rotatif (21).

6. Récipient selon l'une au moins des revendications 1 à 5, caractérisé en ce que la ou les autres tubulures (26) a ou ont la forme d'un tronc de cône de section circulaire qui s'élargit vers le bas.

7. Récipient selon l'une au moins des revendications 1 à 5, caractérisé en ce qu'au-dessus du fond annulaire (5) il comporte un autre fond annulaire (27) comportant des fentes (28) de préférence incurvées et un dispositif de nettoyage rotatif (29).

8. Installation de clarification d'un liquide chargé de matières solides comportant un récipient (1) selon la revendication 1, caractérisée en ce que la partie inférieure (3) du récipient contient un agitateur comportant un bâti (22) adapté à la paroi du récipient et comprenant une grille (23).

9. Installation selon la revendication 8, caractérisée en ce que la partie inférieure (3) du récipient et le bâti (22) de l'agitateur ont une forme conique, la grille (23) étant constituée par des éléments de grille verticaux, par exemple par des bancs, des fils métalliques, des câbles ou analogues.

10. Installation selon l'une des revendications 8 ou 9, caractérisé en ce que l'agitateur est fixé à l'arbre (19) du dispositif d'entraînement (18) du dispositif de nettoyage (21).

FIG. 1

FIG. 2

# FIG.3